# EUROPEAN PATENT APPLICATION

(11) **EP 1 672 616 A1**
(43) Date of publication of application: **21.06.2006**
(21) Application number: 05112438.6
(22) Date of filing: 20.12.2005
(51) Int. Cl.: G10H 1/00

(54) **Music contents providing apparatus and program**

(30) Priority: 20.12.2004 JP 2004367689
(71) Applicant: YAMAHA CORPORATION, Hamamatsu-shi, Shizuoka 430-8650 (JP)
(72) Inventor: Hiratsuka, Satoshi, Shizuoka 430-8650 (JP)
(74) Representative: Kehl, Günther

(57) **Abstract**

A music contents providing apparatus comprises a connecting device that connects the music contents providing apparatus to a network, a storage device that stores a plurality of music contents data, each music contents data corresponding to musical range information or musical instrument information, an obtaining device that obtains musical range information or musical instrument information from an external device connected to the network, an extracting device that extracts music contents data corresponding to musical range information or musical instrument information which is agreed with musical range information or musical instrument information obtained from the external device; and a providing device that provides the extracted music contents data to the external device. The music contents that the user can sufficiently use can be provided.

## Description

### CROSS REFERENCE TO RELATED APPLICATION

This application is based on Japanese Patent Application 2004-367689, filed on December 20, 2004, the entire contents of which are incorporated herein by reference.

### BACKGROUND OF THE INVENTION

### A) FIELD OF THE INVENTION

This invention relates to a music contents providing apparatus, and more in detail, relates to a music contents providing apparatus providing music contents via the network.

### B) DESCRIPTION OF THE RELATED ART

A user can download and purchase music contents by using a music contents distributing server on a communication network such as the Internet (for example, refer to Japanese Laid-Open Patent 2003-076364).

Moreover, a usable music contents format differs corresponding to a type of a client apparatus (a personal computer, an electronic musical instrument, etc) that uses the music contents. Then, the music contents providing apparatus that can provide the music contents by a format that is appropriate for the type of the client apparatus is well-known (for example, refer to Japanese Laid-Open Patent 2004-118256).

### SUMMARY OF THE INVENTION

Sometimes it is impossible or very difficult for a user to play (or use) the music contents with a musical instrument that the user owns although a client apparatus that the user owns can handle a file format of the music contents. For example, it tends to be impossible to play a piece of music composed for the piano with a wind instrument because of lack of musical range and the number of notes. Therefore, it may happen that the user recognizes that the music contents cannot be sufficiently used (played) with the own musical instrument after purchasing the music contents.

It is an object of the present invention to provide a music contents providing apparatus that can provide the music contents that can be sufficiently used.

According to one aspect of the present invention, there is provided a music contents providing apparatus comprising a connecting device that connects the music contents providing apparatus to a network, a storage device that stores a plurality of music contents data, each music contents data corresponding to musical range information or musical instrument information, an obtaining device that obtains musical range information or musical instrument information from an external device connected to the network, an extracting device that extracts music contents data corresponding to musical range information or musical instrument information which is agreed with musical range information or musical instrument information obtained from the external device; and a providing device that provides the extracted music contents data to the external device.

According to the present invention, a music contents providing apparatus that can provide the music contents that can be sufficiently used can be provided.

### BRIEF DESCRIPTION OF THE DRAWINGS

FIG. 1 is a block diagram showing a structure of a music contents providing system 100 according to an embodiment of the present invention.
FIG. 2 is a block diagram showing a hardware structure of the music contents providing system 100 according to the embodiment of the present invention.
FIG. 3A and FIG 3B are schematic diagrams showing music contents data according to the embodiment of the present invention.
FIG. 4 is a schematic diagram showing an example of a musical range conversion table BCT according to the embodiment of the present invention.
FIG. 5 is a flow chart showing a first example of music contents providing process according to the embodiment of the present invention.
FIG. 6A to FIG. 6C are examples of display screens displayed on the music contents using apparatus according to the embodiment of the present invention.
FIG. 7 is a flow chart showing a second example of the music contents providing process according to the embodiment of the present invention.

### DETAILED DESCRIPTION OF THE PREFERRED EMBODIMENTS

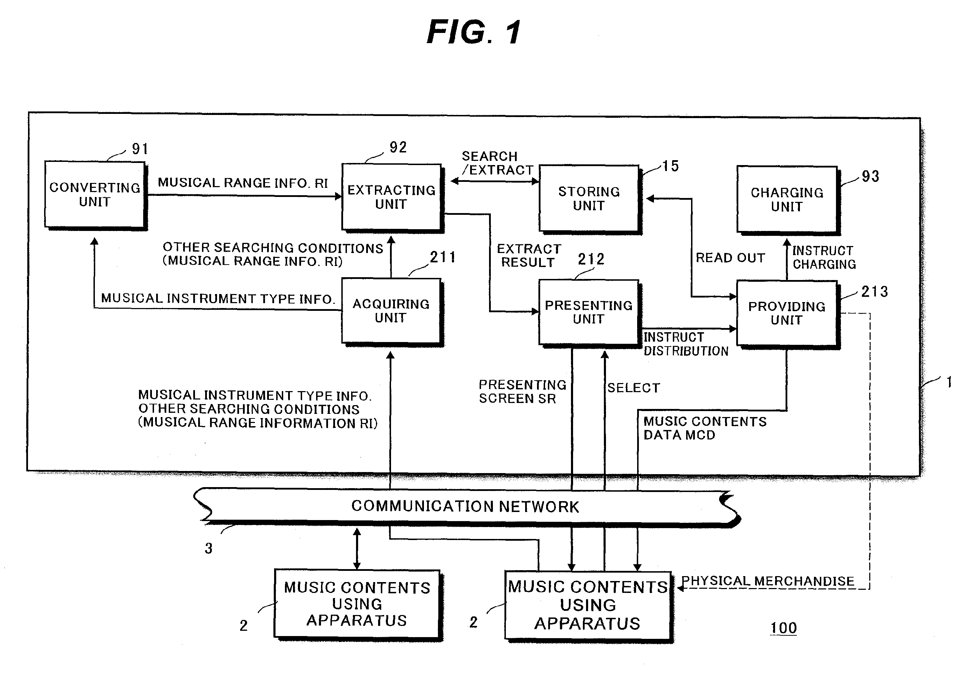

FIG. 1 is a block diagram showing a structure of a music contents providing system 100 according to an embodiment of the present invention.

The music contents providing system 100 is formed by connecting a music contents providing apparatus (server) 1 with at least one music contents using apparatus (client terminal) 2 via the communication network (the Internet, etc.).

The music contents providing apparatus 1 is, for example, the www server that can be browsed (read) via the Internet.

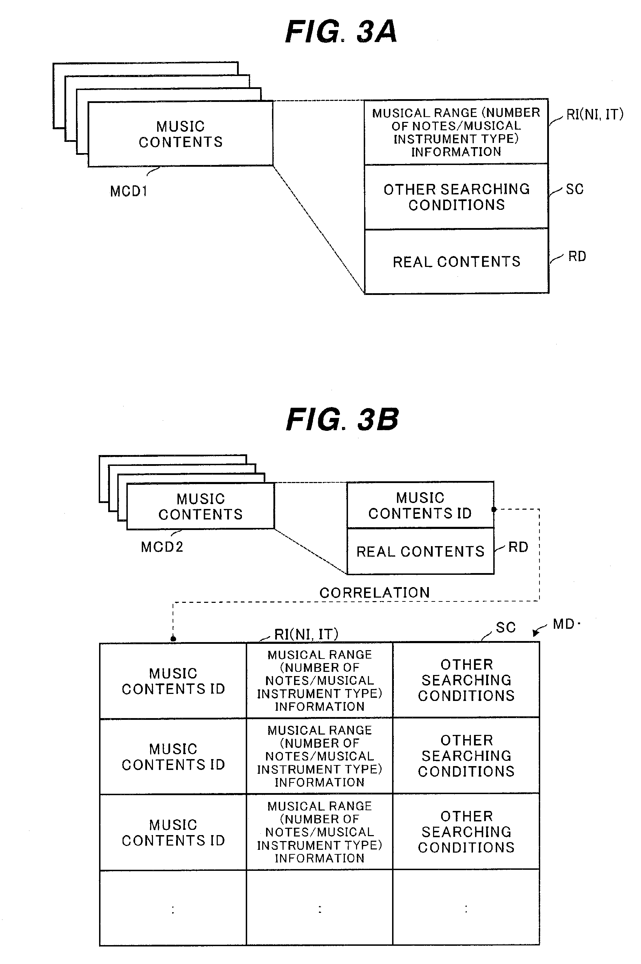

A music contents storing unit 15 stores music contents data MCD1 shown in FIG. 3A or music contents data MCD2 and music contents database MDB shown in FIG. 3B.

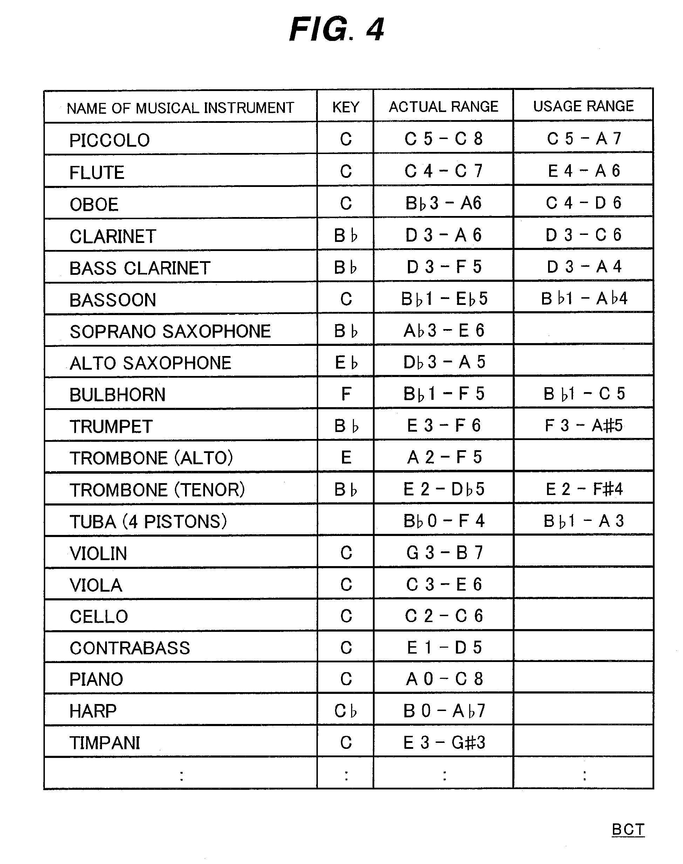

An acquiring unit 211 acquires musical instrument type information IT (or musical range information RI) and other searching condition SC from the music contents using apparatus 2. A converting unit 91 converts the acquired musical instrument type information IT into the musical range information RI by referring a musical range conversion table BCT (FIG. 4).

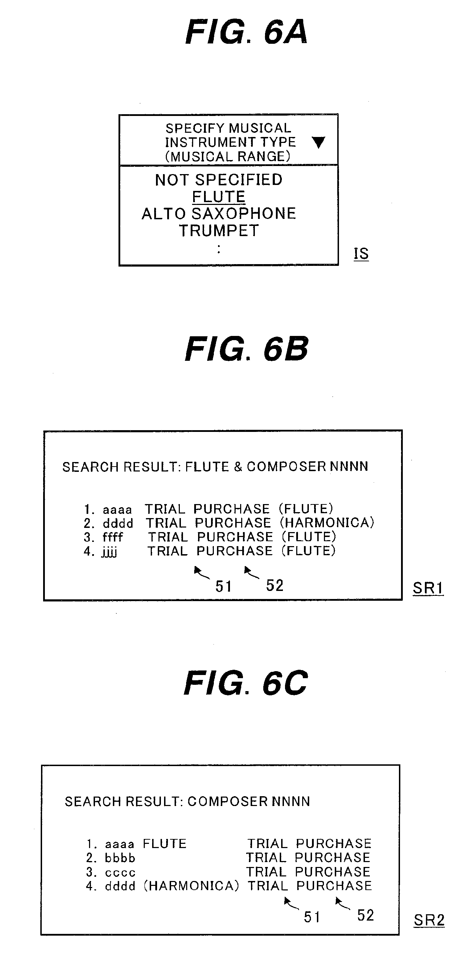

An extracting unit 92 searches and extracts the music contents data MCD by using the musical range information RI. A presenting unit 212 presents the extracted music contents data MCD by transferring it to the music contents using apparatus 2 as a presenting screen shown in FIG. 6B.

A providing unit 213 accepts selection from a user and distributes (downloading, streaming distribution, physical transportation process or the like) the selected music contents data MCD or the music contents corresponding to that. A charging unit 93 charges the user for the distribution of the music contents (the selected music contents data MCD or the music contents corresponding to that).

The music contents using apparatus 2 is a terminal that can connect with a communication network 3 such as a personal computer and an electronic musical instrument and transmits the musical instrument type information IT (or the musical range information RI) input by a user and other searching conditions SC to the music contents providing system 100.

The music contents providing system 100 searches music contents data MCD that can be played with the musical instrument corresponding to the musical instrument type information IT (or the musical range information RI) acquired from the music contents using apparatus 2 and that corresponds to the other searching conditions SC and presents (transmits) the result of the search to the music contents using apparatus 2. Then the music contents providing system 100 provides the music contents data MCD based on the purchasing instruction by the user.

Moreover, the distribution of the music contents data is not limited to the on-line distribution via the communication network, but also includes processes for physically transporting physical merchandise (a musical score printed on paper, a storing medium storing various data and the like) specified by the music contents data MCD. More in detail, the physical merchandise transportation is noticed to a computer of a deliverer. Then the deliverer delivers the merchandise by using means of postal service or other delivery service.

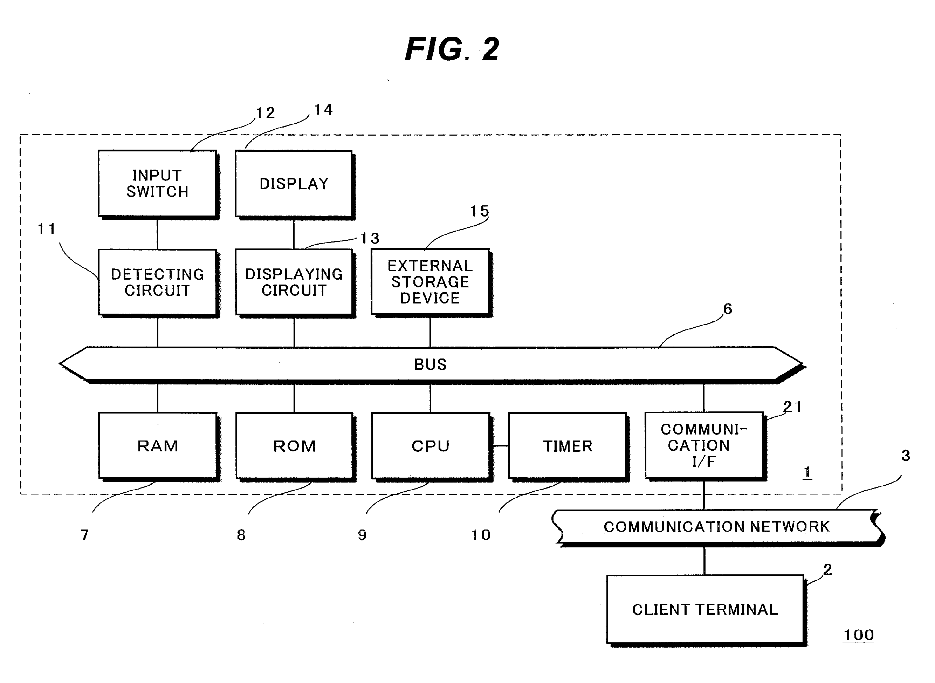

FIG. 2 is a block diagram showing a hardware structure of a music contents providing system 100 according to the embodiment of the present invention.

The music contents providing system 1 includes a bus 6, a RAM 7, a ROM 8, a CPU 9, a timer 10, a detector 11, an input switch 12, a displaying circuit 13, a display 14, an external storage device 15, and a communication interface (I/F) 21.

The RAM 7, the ROM 8, the CPU 9, the external storage device 15, the detector 11, the displaying circuit 13 and the communication interface (I/F) 21 are connected to the bus 6.

The RAM 7 has a buffer region and a working area of the CPU for storing a flag, a register and various parameters.

Various parameters, a control program or a program for realizing the embodiment of the present invention can be stored in the ROM 8. In this case, it is not necessary to duplicatedly store the program in the external storage device 15.

The CPU 9 executes calculations or controls the music contents providing system 1 in accordance with the control program stored in the ROM 8 or the external storage device 15. The timer 10 is connected to the CPU 9 and supplies a standard clock signal, interruption timing and the like to the CPU 9.

A server administrator (user) can input various information and set the music contents providing system 1 by using the input switch 12 connected to the detector 11. The input switch 12 is, for example, an alpha-numerical keyboard, a pointing device such as a mouse, a switch, a pad, a fader, a slider, a rotary encoder, a joy-stick, a jog-shuttle and the like, and may be anything that can output the signal corresponding to an input operation by the server administrator. Also, the input switch 12 may be a software switch displayed on the display 14 operated by a combination with other switch such as a mouse.

The displaying circuit 13 is connected to the display 14 and can display various kinds of information on the display 14. The server administrator executes various inputs and setting with reference to the information displayed on the display 14. The display 14 may be an external displaying device.

The external storage device 15 includes an interface for the external storage device and is connected to the bus 6 via an interface. The external storage device 15 may be a flexible disc or the Floppy (trademark) disc drive (FDD), a hard disc drive (HDD), a magneto optical disc (MO) drive, a CD-ROM (Compact Disc Read Only Memory) drive, a DVD (Digital Versatile Disc), a semiconductor memory and the like.

The Music contents data MCD1 shown in FIG. 3A or the music contents data MCD2 and the music contents database MDB are stored in the external storage device 15. Also, the musical range conversion table BCT is stored in the external storage device 15.

When the hard disc drive (HDD) is equipped as the external storage device 15, the control program or the program for realizing the embodiment of the present invention can be stored in the hard disc drive (HDD) in the external storage device 15. By reading out the control program from the hard disc to the RAM 7, the CPU 9 can execute the same operation as in the case that the control program is stored in the ROM 8. By doing this, addition and version-up of the control program can easily be executed.

Moreover, in addition to the hard disc drive, the control program or the program for realizing the embodiment of the present invention can be stored in the CD-ROM when the CD-ROM drive is equipped. The control program or the program for realizing the embodiment of the present invention can be copied from the CD-ROM to the hard disc. New install and version-up of the control program can easily be executed.

The communication interface 21 can connect with the communication network such as a local area network (LAN) and the Internet and can connect with other server and the music contents using apparatus 2 each other via the communication network 3.

Moreover, the communication interface 21 and the communication network 3 may be wired or wireless. Also, the communication interface 21 may be a built-in type or a removable type such as a PC card and the like.

Moreover, the structure of the music contents using apparatus is as same as the well-known personal computer and the electronic musical instrument, and explanation for that is omitted.

FIG. 3A is a schematic view showing the music contents data MCD1 according to the embodiment of the present invention. FIG. 3B is a schematic view showing the music contents data MCD2 and the music contents database MDB according to the embodiment of the present invention.

The music contents data MCD1 shown in FIG. 3A stores at least one music contents including real contents data RD for reproduction of the music contents, the musical range information RI (musical instrument type information IT and number-of-note information) and other searching conditions SC for specifying the music contents.

The real data RD is consisted of, for example, one or combination of the music information for reproducing or performing the music such as MIDI data (MIDI), audio data (AUDIO), musical score data, etc. Moreover, the real data RD may be added with video data (VIDEO), still image data, other music related data, etc. Furthermore, the music information may be data for a lesson of the musical instrument. Data formats for data included in the real data RD may be one unified data format or a plurality of data formats depending on types of the data.

The musical range information RI is information for specifying a musical range to be used for (necessary musical range for a performance of) the music corresponding to the music information included in the real data RD. In the embodiment of the present invention, the musical instrument type information IT is acquired from the user (the music contents using apparatus 2), a musical range corresponding to the musical instrument type information IT is obtained with reference to the musical range conversion table shown in FIG. 4, and the acquired musical range is compared to the musical range information Rl. When the acquired musical range equals to or is wider than the musical range represented by the musical range information RI, the music is presented to the user as music that the user can perform or use.

Regarding to music that is intended to be performed with a musical instrument other than the musical instrument specified by the musical instrument specifying information (the musical instrument type information IT), when a user can perform the music with the musical instrument specified by the musical instrument specifying information due to the musical range of the music, the music can be presented to the user together with the appropriate musical instrument. In this case, the musical instrument type information IT representing a name of the appropriate musical instrument to be essentially performed with is stored with the musical range information RI in the music contents data MCD. As described in the above, when the music performed with other instrument is presented, number-of-note information NI storing a number of simultaneously soundable notes is stored, and it is judged whether the musical instrument specified by the user can perform the music or not. Moreover, regarding to the number of simultaneously soundable notes of each musical instrument, a table stored the musical instrument type information and the number of notes is prepared in advance. Moreover, the musical range conversion table BCT shown in FIG. 3B may further store the number of simultaneously soundable notes of each instrument.

The music contents data MCD2 shown in FIG. 3B stores the musical range information RI (and/or instrument type information IT number-of-note information NI) for specifying the contents and other searching conditions SC as the music contents database prepared outside the music contents.

The music contents data MCD2 stores real contents data RD and contents ID for correlating the real contents data RD with the information inside the music contents database MDC. The real contents data RD is data similar to the real data RD stored in the music contents data MCD1 shown in FIG. 3A. Moreover, in this example, a physical merchandise (the musical score printed on paper, a storage medium storing various data, etc.) that is sold by a delivery system can be used as the music contents. In this case, information for specifying the physical merchandise and for an actual means for delivering are stored as the real contents data RD.

The music contents database MDB is a database storing the contents ID correlated with the contents ID in each of the contents data MCD2 and the musical range information RI (and/or the musical instrument type information IT, the number-of-note information NI, etc.) for specifying the contents of the music contents data MCD2 corresponding to each contents ID and other searching conditions SC.

FIG. 4 is a schematic diagram showing an example of the musical range conversion table BCT according to the embodiment of the present invention.

At least the name of the musical instrument represented by the musical instrument type information IT and the real musical range (the actual pronounceable musical range) of the musical instrument is stored in the musical range conversion table BCT. Moreover, in addition to the real musical range, a practical musical range (the musical range usually played with the musical instrument) and a key may be stored. If a transposing amount of a transposition musical instrument is required, a musical range of the musical instrument on a musical score may be stored. Moreover, a central C note (C note that will be the center of a great staff) is noted to be C4 in the musical range conversion table BCT shown in the drawing.

In the embodiment of the present invention, the musical instrument type information IT is acquired from the music contents using apparatus 2, and the acquired name of the musical instrument represented by the musical instrument type information IT is converted to the musical range information RI with reference to the musical range converting table BCT For example, if the name of the musical instrument represented by the musical instrument type information IT is "piccolo", the musical range information will be "C5-C8".

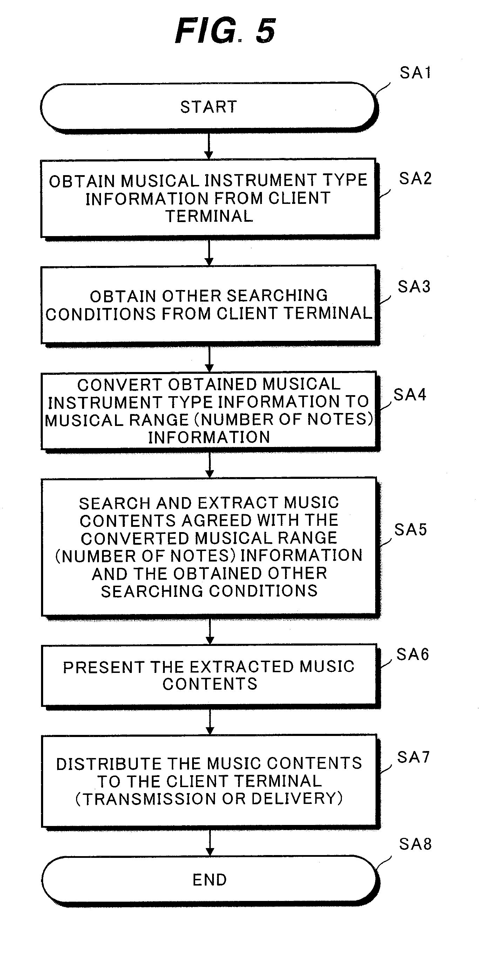

FIG. 5 is a flow chart showing a first example of a music contents providing process according to the embodiment of the present invention. In this example, only the music contents agreed with the musical range corresponding to the musical instrument type specified by the user (the music contents using apparatus 2) and other searching conditions will be represented. This music contents providing process is executed by the music contents providing apparatus 1 when the representation and distribution of the music contents is requested by the music contents using device 2. Moreover, the music contents providing apparatus 1 and the music contents using apparatus 2 are connected each other via the communication network 3 in advance.

At Step SA1, the music contents providing process is started. At Step SA 2, the musical instrument type information IT is obtained from a client terminal (the music contents using apparatus 2) via the communication network 3. The musical instrument type information IT is the information that can at least specify the musical instrument specified by the user, for example, it is information representing the musical instrument type.

Moreover, the musical instrument type information IT is transferred to the music contents providing apparatus 1 by the user selecting a desired instrument type from the musical instrument type specifying screen IS displayed on the display of the music contents using apparatus 2. For example, as shown in FIG. 5A, the musical instrument type specifying screen IS displays a list of the musical instrument types, and the user can select the desired musical instrument type from the displayed list by using the switch (mouse) 12. Moreover, the musical instrument type specifying screen IS is not limited to the one shown in FIG. 5A, but for example, an image (icon) corresponding to each instrument type may be displayed, and the user may select it by using the switch (mouse). Also, the musical instrument type may be displayed with a check box, and the musical instrument type may be selected by putting a check mark in the check box by clicking the check box. Moreover, if the music contents using apparatus by itself is the musical instrument that the user uses (performs), the musical instrument type information IT may be automatically generated by the music contents using apparatus and may be transferred to the music contents providing apparatus. Moreover, the musical instrument type may be specified by that the user can easily specify the musical instrument type.

At Step SA3, other searching conditions are obtained from the client terminal. Other conditions includes searching conditions relating to the music contents such as a composer, a performer, a musical category and the like and formal searching conditions of the music contents such as types of the music contents (the music data, score data, the data for performance lessons and the like) and the formats (the MIDI data, a WAVE data, the physical merchandise and the like).

At Step SA4, the musical instrument type information IT obtained at Step SA2 is converted to the musical range information RI, for example, by using the musical range conversion table BCT Moreover, if the number-of-note information is included in the musical range conversion table BCT, the number-of-note information is also obtained.

At Step SA 5, the music contents data MCD1 (or MCD2) that matches with the musical range information RI converted at Step SA4 (and the number-of-note information) and other searching conditions obtained at Step SA3 is searched and extracted.

At Step SA6, the music contents data MCD1 (or MCD2) extracted at Step SA5 is/are represented. Representation of the music contents data is executed, for example, by displaying the searching result displaying screen (representation screen) SR1 shown in FIG. 6B on the display of the music contents using apparatus 2. At this Step SA6, data for displaying the searching result displaying screen SR1 is generated based on the searching and extracting result at Step SA5 and transmitted to the music contents using apparatus 2.

On the searching result displaying screen SR1 shown in FIG. 6B, the searching conditions (a musical instrument type and other searching conditions) are displayed, and the music contents data matched with the searching conditions are listed therebelow. A listening trial button 51 for a listening trial and a purchasing button 52 for purchasing the music contents are positioned on a side of each music contents to be listed.

Further, in the embodiment of the present invention, since music contents that agrees with the musical range is presented even though the type of the musical instrument is different, the original instrument type of each music contents is also presented in a parenthesis. At this time, the music contents played with the designated musical instrument type is displayed differently from that played with other musical instrument having similar musical range. In this example, although the other musical instrument type is displayed in a parenthesis, the other musical instrument type may be displayed in a different color or the designated musical instrument type may be highlighted. Furthermore, the searching result displaying screen SR1 is not limited to that shown in the drawing but may be any type of screen displaying the music contents agreed with the searching conditions, with reference to which the user can instruct purchase of the music contents agreed with the searching conditions.

Returning to FIG. 5, at Step SA7, the music contents that the user selected to purchase (or listen to for a trial) from the music contents data matching with the searching conditions represented at Step SA6 is distributed to the music contents using apparatus 2. In a case of purchasing the music contents, a charging process to the user is also executed. The charging process is executed by the well-known technique. Also, in the case of the listening trial of the music contents, the music contents on which a usage restriction is imposed is distributed by using the streaming technique. Moreover, when the music contents are the physical merchandise (the musical score printed on paper, the storage device stored the various data, etc.), a delivery process for a physical delivery is executed instead of the distribution via the communication network, and the charging process is also executed. Then, the process advances to Step SA8 to finish the music contents providing process.

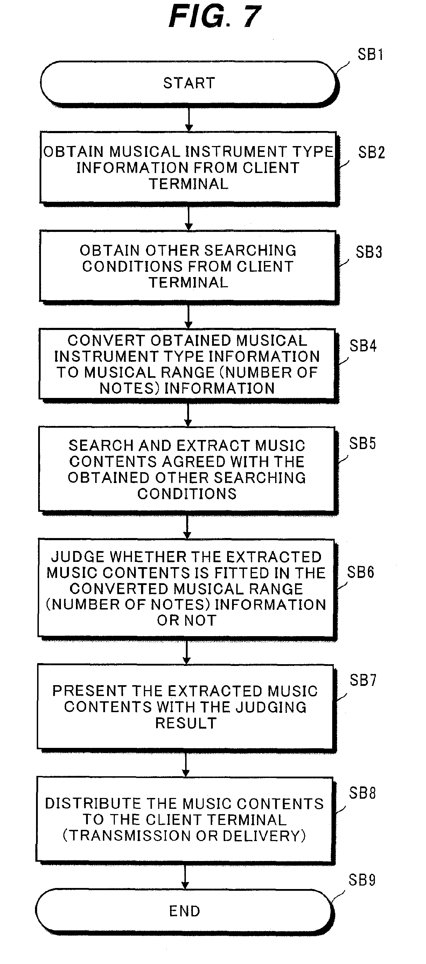

FIG. 7 is a flow chart showing the second example of the music contents providing process according to the embodiment of the present invention. In this example, all the music contents matching with other searching conditions specified by the user (the music contents using apparatus 2) are presented, and the music contents matched with the musical instrument type (and the musical range) is displayed with a message that the music contents is matched with the musical instrument type. This music contents providing process is executed in the music contents providing apparatus 1 when the presentation and distribution of the music contents is requested from the music contents using apparatus 2. Moreover, the music contents providing apparatus 1and the music contents using apparatus 2 are connected with each other via the communication network 3 in advance.

Since the processes from Step SB1 to Step SB4 are the same as those at Step SA1 to Step SA4 shown in FIG. 5, the explanations for them will be omitted.

At Step SB5, the music contents data MCD1 (or MCD2) matching with the other searching conditions obtained at Step SB3 is searched and extracted.

At Step SB6, it is judged whether the music contents data MCD1 (or MCD2) extracted at Step SB5 is fitted in the musical range information (and the number-of-note information) converted at Step SB4 or not.

At Step SB7, the music contents data MCD1 (or MCD2) extracted at Step SB5 is presented with the judging result at Step SB6. The presentation of the music contents data is executed by, for example, displaying the searching result displaying screen (presentation screen) SR2 shown in FIG. 6C on the display of the music contents using apparatus 2. At Step SB7, data for displaying the searching result displaying screen SR2 is generated based on the searching and extracting result at Step SB5 and the judging result at Step SB6 and transmitted to the music contents using apparatus 2.

On the searching result displaying screen SR2 shown in FIG. 6C, the searching conditions (the other searching conditions) are displayed, and all the music contents data matched with the searching conditions are listed therebelow. A listening trial button 51 for a listening trial and a purchasing button 52 for purchasing the music contents are positioned on the side of the each music contents to be listed. Moreover, the music contents fitted in the musical range information (and number-of-note information) converted at Step SB4 (the music contents that may be played by the musical instrument designated by the user) is marked by displaying that the music contents is fitted in the musical range next to each music contents. In this example, the musical instrument type is displayed; however, it is not limited to that, but it may be any displaying style by which a user can recognize that the musical instrument type designated by the user may perform the music contents. For example, the fitted music contents name may be displayed in a style different from other music contents.

Further, in the embodiment of the present invention, since music contents that agrees with the musical range is presented even though the type of the musical instrument is different, the original instrument type of each music contents is also presented in a parenthesis. At this time, the music contents played with the designated musical instrument type is displayed differently from that played with other musical instrument having similar musical range. In this example, although the other musical instrument type is displayed in a parenthesis, the other musical instrument type may be displayed in a different color or the designated musical instrument type may be highlighted. Furthermore, the searching result displaying screen SR2 is not limited to that shown in the drawing but may be any type of screen displaying the music contents agreed with the searching conditions, with reference to which the user can instruct purchase of the music contents agreed with the searching conditions.

Returning to FIG. 7, at Step SB8, the music contents that the user selected to purchase (or listen to for a trial) from the music contents data matching with the searching conditions represented at Step SB7 is distributed to the music contents using apparatus 2. In a case of purchasing the music contents, a charging process to the user is also executed. The charging process is executed by the well-known technique. Also, in the case of the listening trial of the music contents, the music contents on which a usage restriction is imposed is distributed by using the streaming technique. Moreover, when the music contents are the physical merchandise (the musical score printed on paper, the storage device stored the various data, etc.), a delivery process for a physical delivery is executed instead of the distribution via the communication network, and the charging process is also executed. Then, the process advances to Step SB9 to finish the music contents providing process.

As described in the above, according to the embodiment of the present invention, since the contents data that can be performed (used) with the musical instrument type specified by the user is presented and provided, it can be prevented that the distributed (purchased) music contents cannot be performed (used) with the musical instrument specified by the user.

Moreover, according to the embodiment of the present invention, the musical instrument type specified by the user can be converted to the musical range information representing a musical range that can be pronounced by the specified musical instrument type, and the music contents data can be searched by using the converted musical range. By that, the music contents data that can be performed (used) with the musical instrument specified by the user can be presented and provided to the user although the music contents is not originally intended to be performed with the musical instrument specified by the user.

Furthermore, if the number of notes information representing a number of notes simultaneously soundable by the specified type of the musical instrument is prepared, it can be prevented that the music contents cannot be performed because of difference in the number of simultaneously soundable notes when the type of the musical instrument originally intended to perform the music contents is not the specified musical instrument type.

Moreover, information types of the musical range information and the musical instrument type information for each contents stored in the music contents providing apparatus 1 may be different from those specified by the user. In that case, one information type may be converted to another information type. For example, in the embodiment of the present invention, when the music contents providing apparatus 1 has the musical range information, and the user specifies the musical instrument type information, the musical instrument type information from the user is converted to the musical range information of the specified instrument; however, the musical range information that the contents providing apparatus 1 has may be converted to the musical instrument type information.

Moreover, the music contents that is agreed with the musical range if it is transposed by a predetermined (one or plural) octave may be judged as "agreed" even if the musical ranges of the specified musical instrument type and the musical range defined by the musical range information of the music contents are shifted with each other.

Moreover, the music contents providing apparatus 1 is not limited to a world wide web (WWW) server, but it may be realized by a personal computer that the user owns or by a music contents sales terminal installed at a store. For example, a large number of the music contents are stored in the storage device (the hard disk, the CD-ROM and the like) of the personal computer and the sales terminal, and the music contents matched with the specified musical range information and the musical instrument type information is extracted. Then the user can use the music contents (the user can acquire a decryption key of the encrypted music contents after being charged by communicating with a charging server in a case of the personal computer), or the music contents may be stored in a storage device that the user owns (in a case of the sales terminal).

Moreover, in the embodiment of the present invention, the musical instrument type information is received from the music contents using apparatus, and the searching and extracting are executed after converting it to the musical range information; however, the musical range information may be directly received from the music contents using apparatus. Also, if the musical instrument type information is included in the music contents data or the database, the searching and extracting may be executed by the musical instrument type information.

The present invention has been described in connection with the preferred embodiments. The invention is not limited only to the above embodiments. It is apparent that various modifications, improvements, combinations, and the like can be made by those skilled in the art.

## Claims

1. A music contents providing apparatus, comprising:
a connecting device that connects the music contents providing apparatus to a network;
a storage device that stores a plurality of music contents data, each music contents data corresponding to musical range information or musical instrument information;
an obtaining device that obtains musical range information or musical instrument information from an external device connected to the network;
an extracting device that extracts music contents data corresponding to musical range information or musical instrument information which is agreed with musical range information or musical instrument information obtained from the external device; and
a providing device that provides the extracted music contents data to the external device.

2. The music contents providing apparatus according to claim 1, further comprising a presenting device that presents the plurality of the music contents data stored in the storage device to the external device and presents the extracted music contents data to be distinguished from other music contents data.

3. The music contents providing apparatus according to claim 1, further comprising a converter that converts the musical instrument information obtained from the external device into a musical range information, and wherein
the extracting device extracts the music contents data in accordance with the converted musical range information.

4. A program, which a computer executes to realize a music contents providing process, comprising the instructions of:
(a) connecting to a network;
(b) obtaining musical range information or musical instrument information from an external device connected to the network;
(c) extracting, from a storage device storing a plurality of music contents data each of which is corresponding to musical range information or musical instrument information, music contents data corresponding to musical range information or musical instrument information which is agreed with musical range information or musical instrument information obtained from the external device; and
(d) providing the extracted music contents data to the external device.
